# EUROPEAN PATENT APPLICATION

(11) **EP 2 267 498 A2**
(43) Date of publication of application: **29.12.2010**
(21) Application number: 10157678.3
(22) Date of filing: 25.03.2010
(51) Int. Cl.: G02B 6/00, F21V 8/00

(54) **Backlight apparatus, light guide plate, and display apparatus applying the same**

(30) Priority: 26.06.2009 KR 20090057567
(71) Applicant: Samsung Electronics Co., Ltd., Suwon-si, Gyeonggi-do 442-742 (KR)
(72) Inventor: Song, Young-ran, Suwon-si (KR)
(74) Representative: Waddington, Richard

(57) **Abstract**

A backlight apparatus, a light guide plate, and a display apparatus applying the same are provided. A backlight apparatus includes a light guide plate (LGP) on which a plurality of grooves are formed to cut off movement of light, and a light emitting unit which emits the light onto the LGP. Accordingly, an edge-type backlight apparatus can support local dimming using a single LGP which is optically divided.

## Description

### BACKGROUND

### 1. Field

Apparatuses and methods consistent with the inventive concept relate to a backlight apparatus, a light guide plate, and a display apparatus applying the same, and more particularly, to a backlight apparatus that provides local dimming, a light guide plate, and a display apparatus applying the same.

### 2. Description of the Related Art

As technology for light emitting diodes (LEDs) develops, fields using LEDs increase. In particular, since LEDs are used as backlight for display apparatuses, the thickness of display apparatuses can be innovatively thin.

In order to make display apparatuses slim using LEDs, edge-type backlight in which an LED backlight is disposed on the edge of a display is used.

However, edge-type backlight has difficulty in providing local dimming. In a related art, in order to provide local dimming using edge-type backlight, a light guide plate is divided so as to dispose LEDs on sides of the light guide plate, or a light guide plate is partitioned into multiple light guide plates so as to dispose LEDs between light guide plates. However, in these methods, the quality of image does not become uniform due to division or partition of the light guide plate.

A user desires a display apparatus of uniform and good image quality, so there is a need for providing a backlight apparatus capable of displaying images of uniform image quality.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

One or more exemplary embodiments provide a backlight apparatus including a light guide plate on which a plurality of grooves having a linear shape are formed to cut off movement of light, a light emitting unit to emit light onto the light guide plate, and a display apparatus applying the same.

According to the present invention there is provided an apparatus and method as set forth in the appended claims. Other features of the invention will be apparent from the dependent claims, and the description which follows.

According to an exemplary embodiment, there is provided a backlight apparatus including a light guide plate (LGP) on which a plurality of grooves of a linear shape are formed to cut off movement of light, and a light emitting unit which emits the light onto the LGP.

The LGP may be optically divided into a plurality of areas by the grooves.

The light emitting unit may include a plurality of light emitting modules which are disposed to correspond to the plurality of areas of the LGP.

In order to support local dimming, the light emitting unit may operate the plurality of light emitting modules separately based on an input image signal so as to adjust an amount of the light emitted onto each of the plurality of areas.

The grooves of the linear shape may be grooves of a dotted-line shape or grooves of a solid-line shape.

The light emitting unit may emit the light toward a side of the LGP.

The light emitting unit may be disposed along two sides of the LGP which face each other, and the LGP may have the plurality of grooves of the linear shape which are formed perpendicular to the light emitting unit.

The LGP may have one more groove of the linear shape which is formed parallel to the light emitting unit.

Intervals between the plurality of grooves on the LGP may be unequal.

Intervals between the plurality of grooves on the LGP may be increasingly wide toward a center of the LGP.

The light emitting unit may include at least one point light source.

The point light source may be an LED.

According to another exemplary embodiment, there is provided a display apparatus including a backlight apparatus as described above.

According to yet another exemplary embodiment, there is provided an LGP which is included in a backlight apparatus as described above.

### BRIEF DESCRIPTION OF THE DRAWINGS

The above and/or other aspects of the inventive concept will be more apparent by describing certain exemplary embodiments with reference to the accompanying drawings, in which:

FIG. 1 is a perspective view of a backlight apparatus according to an exemplary embodiment;

FIG. 2 is a plane view of a backlight apparatus according to an exemplary embodiment;

FIG. 3 is a front view of a light guide plate having grooves of a linear shape according to an exemplary embodiment;

FIG. 4A is a side view of a light guide plate having grooves of a discontinuous linear shape according to an exemplary embodiment;

FIG. 4B is a side view of a light guide plate having grooves of a continuous linear shape according to an exemplary embodiment;

FIG. 5A illustrates a light guide plate which is optically divided into 8 areas by grooves of a discontinuous linear shape according to an exemplary embodiment;

FIG. 5B illustrates a light guide plate which is optically divided into 16 areas by grooves of a discontinuous linear shape according to an exemplary embodiment;

FIG. 6A illustrates a light guide plate which is optically divided into 8 areas by grooves of a continuous linear shape according to an exemplary embodiment;

FIG. 6B illustrates a light guide plate which is optically divided into 16 areas by grooves of a continuous linear shape according to an exemplary embodiment;

FIG. 7A illustrates a light guide plate which is optically divided into 8 areas by grooves having unequal intervals and a discontinuous linear shape according to an exemplary embodiment;

FIG. 7B illustrates a light guide plate which is optically divided into 16 areas by grooves having unequal intervals and a discontinuous linear shape according to an exemplary embodiment;

FIG. 8A illustrates a light guide plate which is optically divided into 8 areas by grooves having unequal intervals and a continuous linear shape according to an exemplary embodiment;

FIG. 8B illustrates a light guide plate which is optically divided into 16 areas by grooves having unequal intervals and a continuous linear shape according to an exemplary embodiment;

FIG. 9A illustrates a light guide plate on which one more groove of a discontinuous linear shape is formed at the center parallel to a light emitting unit according to an exemplary embodiment; and

FIG. 9B illustrates a light guide plate on which one more groove of a continuous linear shape is formed at the center parallel to a light emitting unit according to an exemplary embodiment.

### DETAILED DESCRIPTION OF EXEMPLARY EMBODIMENTS

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the exemplary embodiments can be practiced without those specifically defined matters. Also, well-known functions or constructions are not described in detail since they would obscure the exemplary embodiments with unnecessary detail.

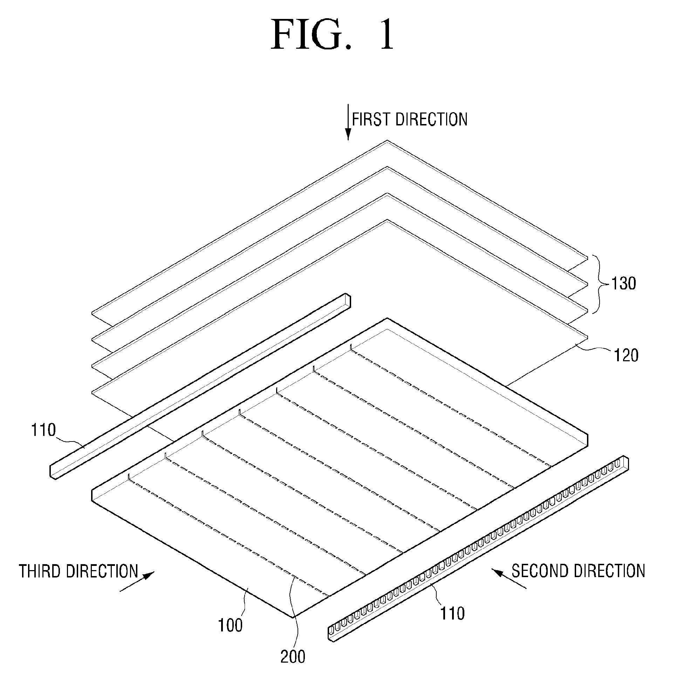

FIG. 1 is a perspective view of a backlight apparatus according to an exemplary embodiment. As illustrated in FIG. 1, the backlight apparatus may include a light guide plate (LGP) 100, a light emitting unit 110, a diffusion plate 120, and an optical sheet 130.

The LGP 100 performs diffused reflection of light incident from a side of the LGP 100 so as to form a surface light source. The LGP 100 uniformly diffuses the light incident on a side of the LGP 100 so as to illuminate light having a uniform luminance to a panel. More specifically, the LGP 100 includes a geometrical pattern which is printed or formed on a bottom surface of the LGP 100 so as to perform diffused reflection of incident light, so the incident light can be reflected with a uniform luminance.

In addition, the LGP 100 includes a plurality of grooves 200 having a linear shape so as to block movement of light. The grooves 200 are formed lengthwise on a bottom surface of the LGP 100. That is, the plurality of grooves 200 having a linear shape are formed on the LGP 100 perpendicular to the light emitting unit 110.

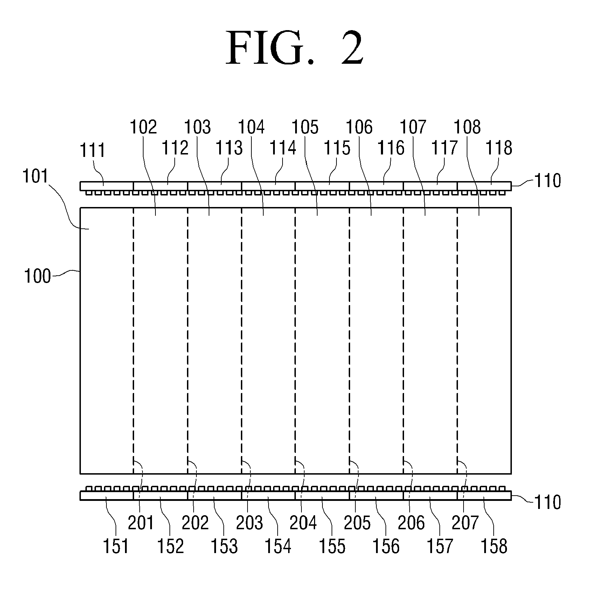

The grooves 200 block movement of light, so the LGP 100 has a plurality of optically separate areas. The plurality of optically separate areas independently diffuse light to another area thereby providing individual areas for local dimming. Local dimming is a method for illuminating backlight of a different luminance on areas of the screen based on information regarding a luminance of an image signal. The shape of the grooves 200 of the LGP 100 is described below with reference to FIGS. 2 to 8B.

The light emitting unit 110 illuminates light from a side of the LGP 100 into the LGP 100. FIG. 1 shows that the light emitting unit 110 illuminates light into the LGP 100 in the second direction. The light emitting unit 110 is disposed on two sides, which face each other, of the LGP 100. For example, FIG. 1 shows that light emitting modules of the light emitting unit 110 are disposed along two opposite sides of the LGP 100, which face each other in the second direction.

As described above, backlight such as the light emitting unit 110 which illuminates light from a side of the LGP 100 is called edge-type backlight. A point light source is used as a light source of the edge-type backlight. More specifically, an LED light source is used as a light source of the edge-type backlight. However, the light emitting unit 110 is not limited with regard to the type of light source that may be used.

The light emitting unit 110 includes a plurality of light emitting modules which are disposed to correspond to the plurality of areas formed by the grooves on the LGP 100, respectively. That is, the light emitting unit 110 includes the light emitting modules, which illuminate light to corresponding areas of the LGP 100. Each light emitting module includes at least one light source, and independently performs a light emitting operation using a driving circuit. That is, the light emitting unit 110 independently operates each light emitting module so that light can be selectively illuminated to certain areas of the LGP 100 based on an input image signal. As a result, the light emitting unit 110 can support local dimming.

The diffusion plate 120 diffuses backlight to widen a field of vision. In addition, the diffusion plate 120 can focus backlight on a relatively dark area. Therefore, the diffusion plate 120 can uniformly distribute backlight. The diffusion plate 120 may be implemented with a lenticular lens sheet in which a plurality of cylindrical lenses are arranged in a row.

The optical sheet 130 gives diverse optical effects to backlight. For example, the optical sheet 130 focuses a polarizing direction of backlight on a particular direction.

As described above, the backlight apparatus includes the LGP 100 which is optically divided by the plurality of grooves.

Hereinafter, the configuration of the LGP 100 viewed in the first, second, and third directions is described with reference to FIGS. 2 to 4B. FIG. 2 is a plane view of the backlight apparatus according to an exemplary embodiment. More specifically, FIG. 2 illustrates the shape of the LGP 100 viewed in the first direction in FIG. 1.

As illustrated in FIG. 2, the LGP 100 is optically divided into eight areas 101-108 by seven grooves 201-207 of a linear shape. The light emitting unit 110 includes eight upper light emitting modules 111-118, and eight lower light emitting modules 151-158.

The first upper light emitting module 111 and the first lower light emitting module 151 emit light to the first area 101. The second to eighth upper light emitting modules 112-118 and the second to eighth lower light emitting modules 152-158 emit light to the second to eighth areas 102-108, respectively.

Since the LGP 100 is optically divided into the first to eighth areas 101-108, the first to eighth areas 101-108 each receive light from different light emitting modules. Therefore, the backlight apparatus can provide local dimming by designating any of the first to eighth areas 101-108 as the unit of local dimming. That is, the backlight apparatus can emit different luminance for each area of the LGP 100 according to information regarding luminance contained in an input image signal, so local dimming can be accomplished using to the first to eighth areas 101-108.

For example, in the case of an image having a bright center and a dark edge, the backlight apparatus may illuminate only the third to sixth upper light emitting modules 113-116 and the third to sixth lower light emitting modules 153-156 which correspond to the third to sixth areas 103-106, respectively.

As described above, the backlight apparatus includes the LGP 100 which is optically divided by the plurality of grooves having a linear shape, so the edge-type backlight can provide local dimming.

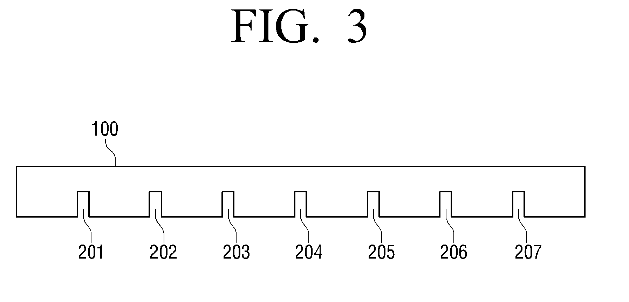

FIG. 3 is a front view of the LGP 100 having grooves of a linear shape according to an exemplary embodiment. That is, FIG. 3 illustrates the shape of the LGP 100 viewed in the second direction in FIG. 1.

As illustrated in FIG. 3, seven grooves 201-207 are formed on the LGP 100. According to an exemplary embodiment, the seven grooves 201-207 may have a uniform width and height. As the width and height of the seven grooves 201-207 increases, more light can be prevented from illuminating other areas of the LGP. However, if the width and height of the seven grooves 201-207 are large, light becomes weak at portions of the LGP on which the seven grooves 201-207 are formed, so the luminance of the backlight may not be uniform. Accordingly, the width and height of the seven grooves 201-207 may be appropriately set to cut off light and maintain uniform luminance.

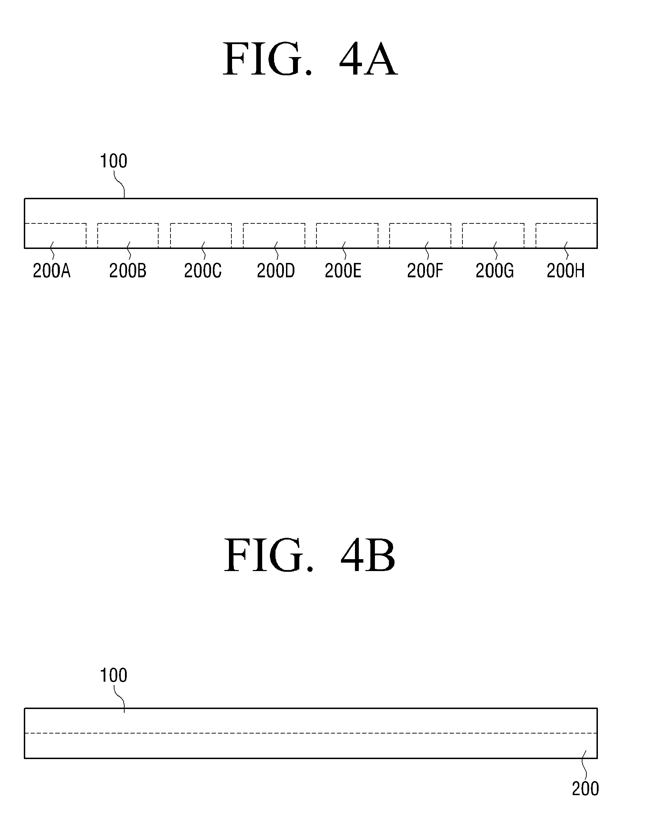

FIG. 4A is a side view of the LGP 100 having grooves of a discontinuous linear shape according to an exemplary embodiment. That is, FIG. 4A illustrates the shape of the LGP 100 viewed in the third direction in FIG. 1. In FIG. 4A, each groove 200 includes a plurality of grooves 200A-200H formed at regular intervals, as denoted by the dotted-lines, in a line extending across the LGP 100 in the second direction.

FIG. 4B is a side view of the LGP 100 having grooves of a continuous linear shape according to an exemplary embodiment. In FIG. 4B, each of the grooves 200 is formed as a single continuous groove extending across the LGP 100 in the second direction, as denoted by a solid line.

The shapes of the LGP 100 having the plurality of grooves have been described in detail so far with reference to FIGS. 2 to 4B. Using the LGP 100, the backlight apparatus can provide local dimming in the optically divided areas of the LGP 100. Therefore, edge-type backlight apparatuses can provide local dimming using the LGP 100 having a low cost and simple assembly.

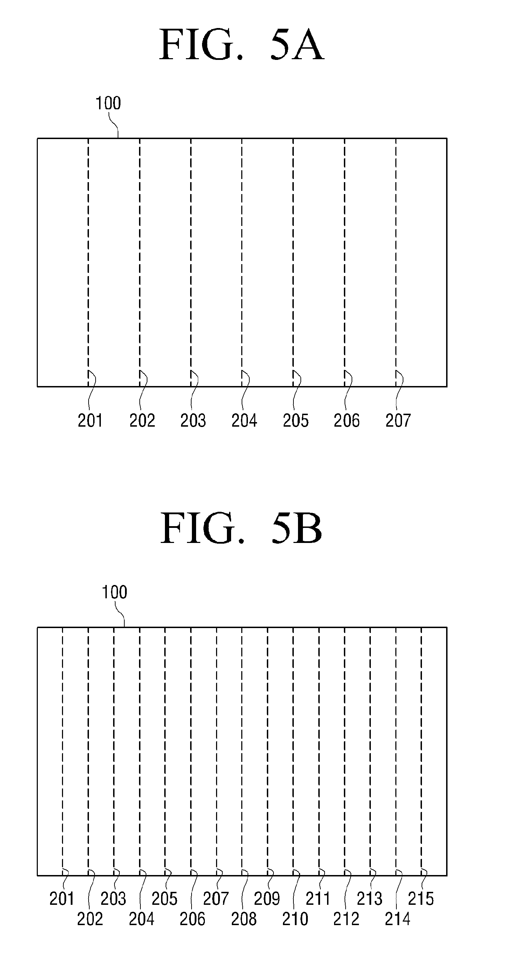

Hereinafter, the LGP 100 having grooves of different shapes and arranged in different configurations is described with reference to FIGS. 5A to 9B.

FIG. 5A illustrates an LGP 100 which is optically divided into eight areas by seven grooves 201-207 of a discontinuous linear shape according to an exemplary embodiment. Using such an LGP 100, the backlight apparatus can provide local dimming in the eight areas.

FIG. 5B illustrates an LGP 100 which is optically divided into 16 areas by 15 grooves 201-215 of a discontinuous linear shape according to an exemplary embodiment. Using such an LGP 100, the backlight apparatus can support local dimming in the 16 areas.

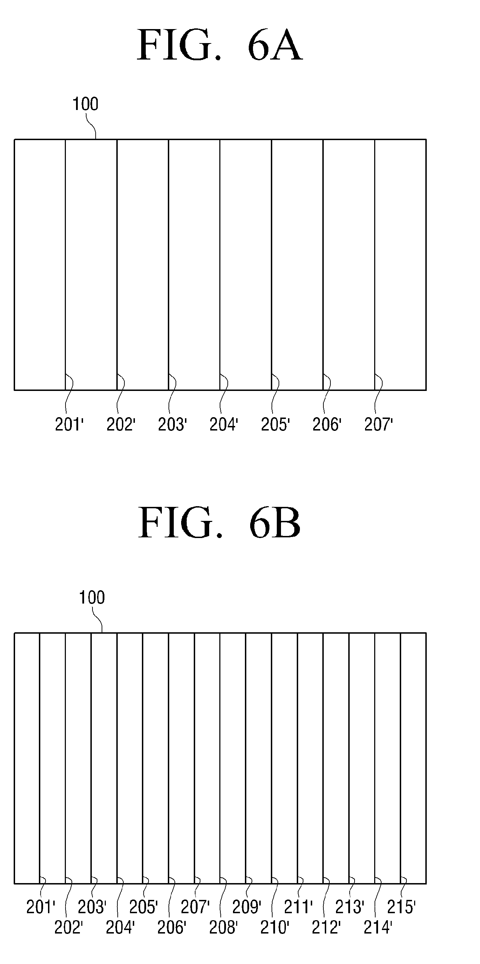

FIGS. 5A and 5B illustrate the LGPs 100 having grooves of a discontinuous linear shape. However, the LGPs may have grooves of a continuous linear shape as in FIGS. 6A and 6B.

FIG. 6A illustrates an LGP 100 which is optically divided into eight areas by grooves 201'-207' of a continuous linear shape according to an exemplary embodiment. Using such an LGP 100, the backlight apparatus can support local dimming in the eight areas.

FIG. 6B illustrates an LGP 100 which is optically divided into 16 areas by grooves 201'-215' of a continuous linear shape according to an exemplary embodiment. Using such an LGP 100, the backlight apparatus can support local dimming in the 16 areas.

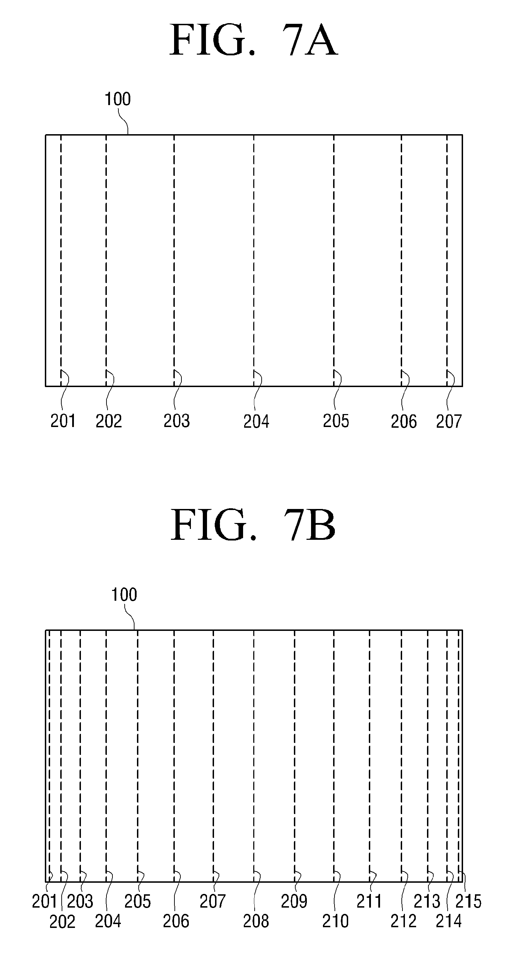

In FIGS. 5A to 6B, the plurality of grooves on the LGP 100 are disposed at equal intervals in the third direction, but the plurality of grooves may be disposed at unequal intervals in the third direction. The latter case is described with reference to FIGS. 7A to 8B.

FIG. 7A illustrates an LGP 100 which is optically divided into eight areas by grooves 201-207 having unequal intervals and a discontinuous linear shape according to an exemplary embodiment. As illustrated in FIG. 7A, intervals between the plurality of grooves 201-207 on the LGP 100 are different. More specifically, intervals between the plurality of grooves 201-207 become increasingly wide towards the center of the LGP 100.

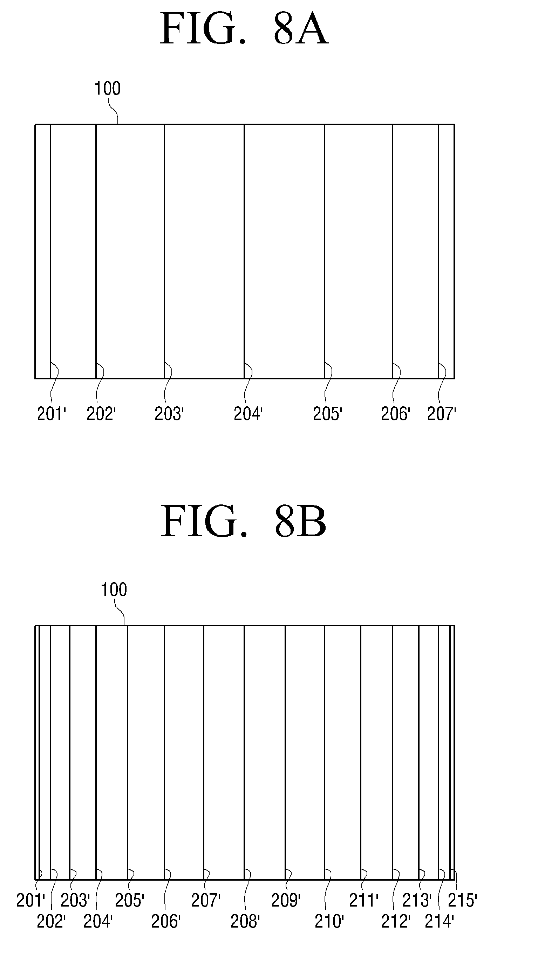

FIG. 7B illustrates an LGP 100 which is optically divided into 16 areas by grooves 201-215 having unequal intervals and a discontinuous linear shape according to an exemplary embodiment. FIG. 8A illustrates an LGP 100 which is optically divided into eight areas by grooves 201'-207' having unequal intervals and a continuous linear shape according to an exemplary embodiment. FIG. 8B illustrates an LGP 100 which is optically divided into 16 areas by grooves 201'-215' having unequal intervals and a continuous linear shape according to an exemplary embodiment. Also, in FIGS. 7B, 8A and 8B, intervals between the plurality of grooves become increasingly wide towards the center of the LGP 100.

If intervals between the plurality of grooves are unequal, uniformity of luminance on the center and edge of the screen can be enhanced.

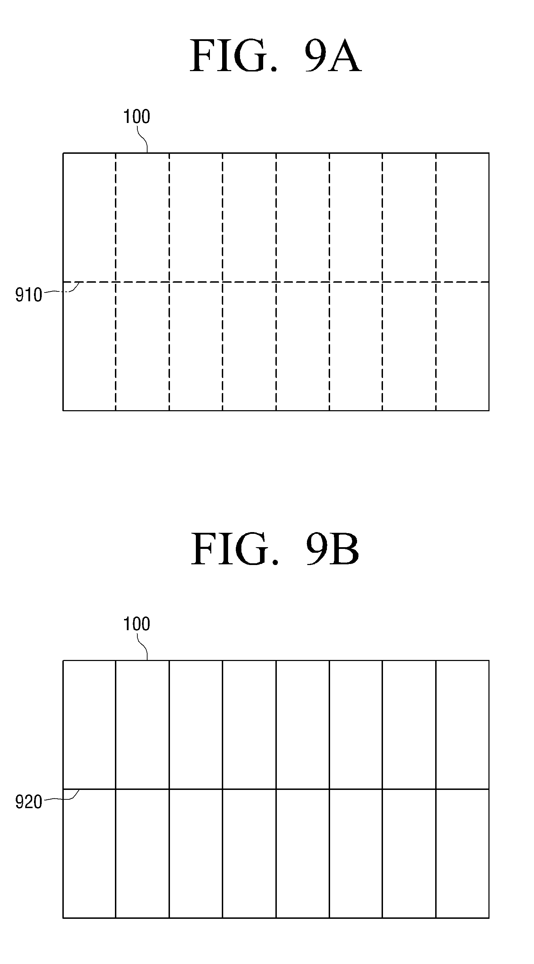

FIG. 9A illustrates an LGP 100 on which an additional groove of a discontinuous linear shape is formed at the center of LGP 100 and parallel to the light emitting unit 110 according to an exemplary embodiment. As illustrated in FIG. 9A, a groove 910 is formed horizontally at the center of the LGP 100. Accordingly, the LGP 100 is divided into 16 areas, and the backlight apparatus can support local dimming using the 16 areas.

FIG. 9B illustrates an LGP 100 on which an additional groove of a continuous linear shape is formed at the center of LGP 100 and parallel to the light emitting unit 110 according to an exemplary embodiment. As illustrated in FIG. 9B, a groove 920 is formed horizontally at the center of the LGP 100. Accordingly, the LGP 100 is divided into 16 areas, and the backlight apparatus can support local dimming using the 16 areas.

The edge-type backlight apparatus capable of providing local dimming using the single LGP 100 which is optically divided has been described in detail. If local dimming is provided using the single optically divided LGP 100 as described above, the process of manufacture can be simplified and manufacture costs can be saved compared with using an LGP which is physically divided. In addition, if the single optically divided LGP 100 is used, the number of required LEDs decreases, so the price of the backlight apparatus can be reduced.

The edge-type backlight apparatus in the above exemplary embodiments can be applied as a backlight apparatus for a display apparatus. More specifically, the backlight apparatus according to the above exemplary embodiments can be applied as a backlight apparatus for an LCD display apparatus.

As can be appreciated from the above description, a backlight apparatus including an LGP on which a plurality of grooves having a linear shape are formed to cut off movement of light, and a light emitting unit to emit light onto the LGP, and a display apparatus applying the same are provided, so the edge-type backlight apparatus can support local dimming using the single optically divided LGP.

The foregoing exemplary embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A backlight apparatus, comprising:
a light guide plate (LGP) having at least one groove that prevents movement of light across the groove; and
a light emitting unit which emits the light onto the LGP.

2. The backlight apparatus according to claim 1, wherein the LGP is optically divided into at least two areas by the at least one groove.

3. The backlight apparatus according to claim 2, wherein the light emitting unit comprises at least two light emitting modules disposed corresponding to the at least two areas of the LGP.

4. The backlight apparatus according to claim 3, wherein the light emitting unit adjusts an amount of the light emitted onto each of the at least two areas of the LGP by separately controlling the at least two light emitting modules to emit light based on an input image signal.

5. The backlight apparatus according to any one of claims 1 to 4, wherein the at least one groove has a linear shape.

6. The backlight apparatus according to claim 5, wherein the at least one groove has a discontinuous linear shape has a dotted-line shape.

7. The backlight apparatus according to claim 5, wherein the at least one groove has a continuous linear shape.

8. The backlight apparatus according to any one of claims 1 to 7, wherein the light emitting unit emits the light toward a side of the LGP.

9. The backlight apparatus according to claim 8, wherein the light emitting unit is disposed along first and second sides of the LGP which face each other, and the at least one groove extends between the first and second sides of the LGP in a direction perpendicular to the first and second sides of the LGP.

10. The backlight apparatus according to claim 9, wherein the LGP further comprises another groove that extends in a direction parallel to the first and second sides of the LGP.

11. The backlight apparatus according to claim 9, wherein the at least one groove comprises a plurality of grooves that are separated by different intervals.

12. The backlight apparatus according to claim 11, wherein the intervals between the plurality of grooves are increasingly wide toward a center of the LGP.

13. The backlight apparatus according to any one of claims 1 to 12, wherein the light emitting unit comprises at least one point light source.

14. The backlight apparatus according to claim 13, wherein the at least one point light source is a light emitting diode.

15. A display apparatus comprising a backlight apparatus according to any one of claims 1 to 14.
